# EUROPÄISCHE PATENTSCHRIFT

(11) **EP 2 676 780 B1**
(45) Veröffentlichungstag und Bekanntmachung des Hinweises auf die Patenterteilung: **02.08.2017**
(21) Anmeldenummer: 12172451.2
(22) Anmeldetag: 18.06.2012
(51) Int. Cl.: B29C 70/54, B29B 11/16, B29C 70/44, B29C 70/86

(54) **Verfahren zur Herstellung eines schichtförmigen Halbzeuges**
Method for manufacture of a layered semi-finished product
Procédé de fabrication d'un semi-produit multi-couches

(43) Veröffentlichungstag der Anmeldung: 25.12.2013
(73) Patentinhaber: Technische Universität Dresden, 01069 Dresden (DE); ThyssenKrupp Steel Europe AG, 47166 Duisburg (DE); Leichtbau-Zentrum Sachsen GmbH, 01307 Dresden (DE)
(72) Erfinder: Krahnert, Torsten, 14554 Seddin (DE); Patberg, Lothar, Dr., 47445 Moers (DE); Mayer, Stefan, 58239 Schwerte (DE); Knobloch, Marcus, 01217 Dresden (DE); Werner, Jens Dr., 01640 Coswig (DE); Hufenbach, Werner Prof. Dr., 01324 Dresden (DE); Lepper, Martin Dr., 01279 Dresden (DE)
(74) Vertreter: Kailuweit & Uhlemann Patentanwälte Partnerschaft mbB

(56) Entgegenhaltungen:
- WO-A1-84/02490
- DE-A1-102010 031 886
- FR-A1- 2 711 682
- JP-A- 61 261 012

## Beschreibung

Die Erfindung betrifft ein Verfahren zur Herstellung eines schichtförmigen Halbzeuges zur Weiterverarbeitung zu Faserverbundwerkstoff-Bauteilen, Faserverbundmaterialien, bestehend aus technischen Textilien und thermoplastischen Kunststoffen, sind aus dem Stand der Technik bekannt. Ebenfalls bekannt sind flächige Halbzeuge wie Prepregs, Semipregs, die aus miteinander verbundenen Textil- und Thermoplastschichten bestehen, die noch nicht vollständig miteinander konsolidiert sind, oder Organobleche. Die Herstellung solcher Halbzeuge erfolgt dabei in der Regel in kontinuierlichen Prozessen, bspw. in Doppelbandpressen, unter der Verwendung von Druck und Temperatur mit zumindest teilweiser Aufschmelzung des Thermoplasts und Verbindung desselben mit dem Textil. Aus dieser Vorkonsolidierung resultieren dabei Einschränkungen bezüglich der Verwendung unterschiedlicher Thermoplaste, Schichtdicken oder Faserlagen sowie -orientierungen, da dadurch die Haftung der Schichten untereinander beeinflusst werden könnte.

Anwendern dienen derartige Halbzeuge in der Regel zur Herstellung komplexer Strukturen, bspw. im Bereich des Fahrzeugbaus oder der Luft- und Raumfahrttechnik. Zur Erzeugung eines fertigen Bauteils aus Faserverbundwerkstoff werden in der Regel mehrere dieser Halbzeuge in oder auf einer Form übereinandergelegt. Aufgrund der bestehenden festen Verbindung zwischen den Schichten des Thermoplasts und des Textils, durch einen Kleber oder eine teilweise Konsolidierung, ist die Kaltumformbarkeit des Halbzeuges dabei stark eingeschränkt. Dies macht eine Erwärmung des Halbzeugs auf Schmelztemperatur der Thermoplaste bereits im Preforming, also schon vor dem eigentlichen Umformschritt, erforderlich, in dem durch Temperaturerhöhung die Halbzeuge in sich und untereinander konsolidiert und verfestigt werden.

Unter konsolidieren bzw. Konsolidierung wird verstanden, dass der Faserverbundwerkstoff ausgehärtet wird. Dies kann teilweise geschehen (teilweise Konsolidierung) oder vollständig erfolgen. Unkonsolidiert ist der Faserverbundwerkstoff, wenn kein Verfestigungsprozess stattgefunden hat.

Diese zweifache Erhitzung, die aus dem Aufbau heutiger Semipregs bzw. Prepregs resultiert, ist nicht nur energetisch ungünstig sondern führt beim Zusammenfügen der Halbzeuge auch dazu, dass vermehrt Luft zwischen den einzelnen Lagen eingeschlossen wird. Dies kann eine Beeinträchtigung sowohl der mechanischen als auch der optischen Eigenschaften des fertigen Bauteils zur Folge haben.

Zur Vermeidung dieser Lufteinschlüsse werden die Halbzeuge häufig unter Unterdruck zusammengefügt.

So wird in der WO2001/000405A2 ein Verfahren beschrieben, bei dem ein teilweise konsolidiertes Prepreg in einem Vakuumbeutel evakuiert und erhitzt wird, um zwischen den Schichten des Prepreg eingeschlossene Luft zu entfernen. Gleichzeitig mit der Entlüftung sorgt die Erhitzung für die völlige Durchtränkung des Fasermaterials mit dem Thermoplast und schließlich für die Konsolidierung der Schichten zum fertigen Bauteil. Aus der Vorkonsolidierung des Prepreg resultiert auch hier eine schlechte Kaltumformbarkeit, die ein Vorschmelzen im Preforming erforderlich macht. Darüber hinaus liegt der gesamte apparative und sonstige Aufwand der Entlüftung weiterhin beim Endanwender.

Das Einschließen der Halbzeuge, und unter Umständen auch der Form, in einem Vakuumbeutel bedeutet für den Anwender in jedem Fall einen erhöhten Arbeits- sowie apparativen Aufwand. Um dem Endanwender eine möglichst einfache Entlüftung des Schichtaufbaus zu ermöglichen, sind aus dem Stand der Technik bereits Halbzeuge bekannt, die in ihrem Aufbau für die Entlüftung im Vakuumbeutel optimiert sind.

Die EP 2085212 A1 beschreibt dazu ein mehrlagiges faserverstärktes Thermoplast-Flachmaterial, in dessen Innerem Lagen enthalten sind, die Entlüftungsöffnungen bzw. Entlüftungskanäle aufweisen, damit die eingeschlossene Luft beim Verpressen und Konsolidieren des Flachmaterials besser entweichen kann. Die einzelnen Schichten des mehrlagigen Flachmaterials sind dabei jedoch fest miteinander verbunden, die Deckschichten werden bspw. im erwärmten Zustand aufgepresst und so mit dem restlichen Flachmaterial verklebt. Die dabei entstehende Vorkonsolidierung bewirkt eine schlechte Kaltumformbarkeit des Flachmaterials. Zudem ist die Entlüftung der Schichten zusammen mit oder kurz vor dem Umformschritt unverändert mit hohem apparativem Aufwand verbunden.

Um den Endanwender zu entlasten sind aus dem Stand der Technik bereits Verfahren bekannt, bei denen die Herstellung der Halbzeuge unter Vakuum erfolgt und diese somit schon in der Herstellung entlüftet werden.

Die DE 4115831A1 beschreibt ein kontinuierliches Verfahren zur Herstellung flächiger Verbundwerkstoffe wobei ein schichtförmig aufgebautes Flachmaterial zu einem Folienschlauch verarbeitet wird. Die einzelnen Schichten aus Thermoplast und Verstärkungsfasergebilde sind dabei in einem Endlosschlauch abgelegt, dessen Ränder längs zu seiner Vorschubrichtung dicht verbunden sind. Die Evakuierung des Folienschlauchs bzw. des schichtförmigen Flachmaterials erfolgt dann beim Durchgang der aufeinander abgelegten Schichten durch eine Presse. In dieser erfolgt eine Abdichtung des Schlauchs auch quer zur Vorschubrichtung sowie eine Erwärmung und Aufschmelzung des Matrix-Thermoplasts. Die Evakuierung des Flachmaterials erfolgt somit gleichzeitig mit dessen Konsolidierung bzw. Vorkonsolidierung. Ist ersteres der Fall obliegt die aufwendige Entlüftung des Prepreg dem Anwender, im zweiten Fall resultiert wiederrum ein vorkonsolidiertes Halbzeug mit schlechter Kaltumformbarkeit.

Nicht zuletzt sind bekannte Halbzeuge nicht oder nur sehr begrenzt geeignet, Bauteile mit komplizierten Geometrien herzustellen. So besteht gelegentlich das Problem, dass die Halbzeuge beim Einlegen in eine bzw. Schließen der Presse zum Konsolidieren aufgrund der komplizierten Geometrie verrutschen bzw. die nicht gleichmäßig anliegen.

Keines der bislang aus dem Stand der Technik bekannten Halbzeuge weist eine Kombination aller zur Herstellung komplexer Bauteile mit sehr gutem Eigenschaftsspektrum notwendigen Merkmale auf. Bei diesen Merkmalen handelt es sich insbesondere um eine gute Drapierbarkeit, die Vermeidung von Faserabgleitungen sowie das Verhindern von Lufteinschlüssen im Halbzeug. Dies gilt sowohl für die aus dem Stand der Technik bekannten Prepregs, Schichtaufbauten aus mit Matrixwerkstoffen vorimprägnierten Verstärkungsfasergebilden, sowie die bereits bekannten Semipregs, Schichtaufbauten mit oberflächlich miteinander verbundenen Lagen aus Verstärkungsfasergebilden und Matrixwerkstoff.

Die DE 10 2010 031 886 A1 beschreibt ein Verfahren zur Herstellung eines Bauteils aus einem Faserverbundwerkstoff. Als Zwischenschritt wird die Herstellung eines Vorformlings beschrieben, bei dem eine Anzahl von Lagen trockenen Fasermaterials zwischen zwei thermoplastischen Folien eingeschweißt und der Zwischenraum evakuiert wird. Zur Fertigstellung des Bauteils wird ein flüssiger Duroplast in den Innenraum unter Tränkung des Fasermaterials eingebracht, der dann in der Form, in die der Vorformling umgeformt wurde, aushärtet. Damit kommt ein Duroplast als Matrixwerkstoff zur Anwendung, wobei die thermoplastische Folie beim Aushärten des Duroplasten dauerhaft als Oberfläche angebunden werden kann. Dies geschieht entweder durch einen Formschluss zum Bauteil, d.h. eine mechanische Verankerung der Folie an Hinterschneidungen des ausgehärteten Duroplasten, oder durch eine stoffschlüssige, d.h. chemische, Anbindung an das Duroplast, wobei vorteilhafterweise ein Haftvermittler eingesetzt wird.

Die JP 61261012 A offenbart ein Verfahren, bei dem ein Stapel aus Prepregs, d.h. mit Harz imprägniertem Basismaterial, zwischen zwei Folien angeordnet wird, die Folien anschließend gasdicht verbunden werden und der Zwischenraum zwischen den Folien evakuiert wird. Zur Herstellung eines Bauteils wird das derartig präparierte Halbzeug unter Einsatz von Temperatur und Druck geformt, wobei ein Änderung der Dimensionen sowie ein Verziehen des Bauteils während des Herstellungsverfahrens vermieden wird. Über das Material der Folien ist keine Aussage entnehmbar.

Die WO 84/02490 A1 beschreibt ein schichtförmiges Halbzeug, bei dem Verstärkungsfasern und Plastikmaterial, d.h. Matrixmaterial, in einer Folienverpackung unter Unterdruck eingeschlossen werden. Bezüglich der umhüllenden Folien wird lediglich gesagt, dass die Folie ein Teil des fertigen Bauteils sein kann oder von diesem nach dem Aushärtungsprozess des Bauteils getrennt werden kann.

Die Aufgabe der vorliegenden Erfindung ist es, ein Verfahren zur Herstellung eines kostengünstigen Halbzeugs bzw. SemiPREpregs mit den zur Herstellung komplexer Faserverbundwerkstoff-Bauteile notwendigen Merkmalen vorzustellen und die genannten Nachteile des Standes der Technik zu überwinden. Das mit dem erfindungsgemäßen Verfahren hergestellte Halbzeug soll auch Ausführungsformen aufweisen, die besonders für dicke Schichtaufbauten und die Herstellung von Bauteilen mit komplexen Geometrien geeignet sein. Weiterhin sollen Ausführungsformen des hergestellten Halbzeugs den zu erwartenden Belastungsfällen des aus ihm hergestellten Endproduktes besonders gut angepasst sein.

Die Aufgabenstellung wird durch ein Verfahren zur Herstellung eines Halbzeugs nach Anspruch 1 oder 4 gelöst. Bevorzugte Weiterbildungen sind in den rückbezogenen Unteransprüchen dargestellt.

Das mit dem erfindungsgemäßen Verfahren hergestellte Halbzeug weist eine Ober- und eine Unterfolie sowie eine zwischen Ober- und Unterfolie angeordnete Schichtfolge auf. Die Schichtfolge besteht aus einer oder mehreren Schichten. Die Schichtfolge weist mindestens eine Verstärkungsfasergebildeschicht mit unkonsolidierten Verstärkungsfasern auf. Darüber hinaus weist in einer bevorzugten Ausführungsform die Schichtfolge mindestens eine Schicht mit mindestens einer ebenen metallischen Einlage (Einleger) auf. In einer weiterhin bevorzugten Ausführungsform sind die metallischen Einlagen in die Verstärkungsfaserschicht integriert. In noch einer weiteren bevorzugten Ausführungsform ist zusätzlich oder alternativ auch Matrixmaterial in die Verstärkungsfaserschicht integriert, diese jedoch nicht konsolidiert.

Optional weist die Schichtfolge weitere Schichten auf. Diese weiteren Schichten können auch durch weitere Folien, die nicht mit der Ober- oder der Unterfolie identisch sind, gebildet werden. Diese weiteren Schichten können bevorzugt Schichten aus Verstärkungsfasergebilde oder Matrixmaterial sein, wobei auch Schichten mit einer Mischung aus Verstärkungsfasergebilde und Matrixmaterial (Hybridschichten) möglich sind.

Optional sind auch weitere Schichten mit metallischen Einlegern möglich.

Vorteilhaft ermöglichen metallische Einleger, die Geometrie des Halbzeuges vor dem Einlegen in das Werkzeug zum Konsolidieren dessen Geometrie anzupassen. Die metallischen Einleger sind dabei in den Kantenbereichen bzw. Bereichen mit kleinen Krümmungsradien der herzustellenden Bauteilgeometrie angeordnet, so dass das Halbzeug nach der Anpassung der Geometrie diese behält. Wenn das Halbzeug zur Anpassung der Geometrie mehrfach gekrümmt wird, können diese Krümmungen in dieselbe und/oder in unterschiedliche Raumrichtungen gerichtet sein. Erst aufgrund der vorher angepassten Geometrie ist ein sicheres Einlegen des Halbzeuges in das Werkzeug zum Konsolidieren möglich, so dass das erfindungsgemäße Halbzeug zur Herstellung von Bauteilen mit komplizierten Geometrien besonders gut geeignet ist. Die Anpassung der Geometrie kann dabei beispielsweise durch Abkanten oder Tiefziehen erfolgen. Die erfindungsgemäßen Halbzeuge können somit in ebener Form transportiert und gelagert werden, was aufgrund des dadurch geringen Platzbedarfs vorteilhaft erhebliche Kosteneinsparungen mit sich bringt.

Die Ober- und Unterfolien bestehen bevorzugt selbst aus thermoplastischem Matrixwerkstoff. Bestehen Ober- und Unterfolien selbst nicht aus Matrixwerkstoff, ist zwischen diesen Folien erfindungsgemäß, zusätzlich zu dem Verstärkungsfasergebilde und zu der optionalen mindestens einen Schicht mit metallischen Einlagen, Matrixwerkstoff angeordnet.

Die Ober- und die Unterfolien sind vollständig umlaufend miteinander verbunden, wobei im zwischen ihnen befindlichen Volumen ein Vakuum, somit ein Unterdruck, herrscht. Durch die Ober- und die Unterfolien sowie deren umlaufende Verbindung ist das Volumen druckhaltend eingeschlossen, so dass der Unterdruck über den Lagerzeitraum des Halbzeugs erhalten bleibt bzw. lediglich geringfügig abnimmt (d. h. die Verwendbarkeit des Halbzeugs bleibt über den Lagerzeitraum erhalten). Das Verstärkungsfasergebilde des erfindungsgemäßen Halbzeuges ist ausschließlich unkonsolidiert. Das Halbzeug ist bevorzugt eben oder annähernd eben. Es kann jedoch auch einfach oder mehrfach gekrümmt sein. Wenn das Halbzeug mehrfach gekrümmt ist, können diese Krümmungen in dieselbe und/oder in unterschiedliche Raumrichtungen gerichtet sein. Analoges trifft auch auf die einfach oder mehrfach gekrümmte Form zur Herstellung des Halbzeugs zu, falls eine solche genutzt wird.

Das Vakuum bzw. der Unterdruck liegt bevorzugt im Bereich von 0,1 mbar bis 800 mbar, besonders bevorzugt zwischen 1 mbar und 100 mbar. Unter evakuieren bzw. Evakuierung wird im Folgenden die Herstellung dieses Unterdrucks mittels Verfahren nach dem Stand der Technik (z. B. Vakuumpumpen) verstanden.

Die Materialdicke der Ober- bzw. Unterfolie beträgt bevorzugt 0,05 mm bis 1 mm. Sie ist in jedem Fall so groß zu wählen, dass die Aufrechterhaltung des Vakuums über den beabsichtigten Lagerzeitraum gewährleistet ist. Auch die zu erwartenden Bugsier- und Kaltumformprozesse im Umfeld der Produktionsvorbereitung bzw. beim Anpassen an die Geometrie/eine Werkzeugform dürfen nicht zu einem Bruch der Folien führen.

Die Ober- und Unterfolien des erfindungsgemäßen Halbzeugs sind umlaufend um den gesamten Rand des Halbzeugs miteinander verbunden. Sie umhüllen somit die Schichtfolge vollständig. Sollte eine schlauchförmige Folie zur Ausbildung von Ober- und Unterfolie genutzt werden, indem die Schichtfolge in diesen Folienschlauch eingeschoben wird, bildet der Folienteil der Schlauchfolie, der auf einer Seite der Schichtfolge angeordnet ist die Unterfolie, während der gegenüberliegende Teil auf der anderen Seite der Schichtfolge die Oberfolie bildet. Die umlaufende Verbindung von Unter- und Oberfolie bezeichnet dann die Verbindung der Überstände an den beiden offenen Schlauchenden.

Das Halbzeug ist in einer bevorzugten Ausführungsform vorteilhaft entsprechend der in der Endfertigung angestrebten Form vorgeformt oder weiterhin bevorzugt flächig und eben bzw. annähernd eben ausgebildet. Dies ermöglicht vorteilhaft ein leichteres Einsetzen in das Werkzeug zur Endfertigung. Durch die Evakuierung des Volumens zwischen der Ober- und der Unterfolie werden die Schichten der Schichtfolge aufeinander gepresst und so eine Verschiebung gegeneinander erschwert. Dies führt dazu, dass das Halbzeug während der Lagerung die Form beibehält, die es zu Zeitpunkt der Evakuierung des Volumens hatte. Es ist jedoch weiterhin umformbar, da die Schichten der Schichtfolge nicht form- oder stoffschlüssig sondern lediglich kraftschlüssig miteinander verbunden sind.

Das Verstärkungsfasergebilde ist bevorzugt flächig und flexibel. Als Material für das Verstärkungsfasergebilde werden vorzugsweise aus dem Stand der Technik bekannte Arten von für Verbundwerkstoffe üblichen Faserstoffen, bspw. Natur-, Glasfaser-, Aramid- oder Kohlefasern, genutzt. Es sind ebenso Gemische verschiedener Fasern möglich. Die Verstärkungsfasern können dabei in regelmäßigen oder unregelmäßigen textilen Flächengebilden vorliegen. Sie sind bspw. Gewebe, Gelege, Comingling Garne, Hybrid-Garn-Textil-Thermoplast (HGGT) oder Geflechte oder auch Vliese bzw. gefilzt oder gewalkt. Beim Einsatz von Hybrid Garnen (Garne, die neben Verstärkungsfasern auch Matrixwerkstoff enthalten) sind solche bevorzugt, bei denen Fasern und Matrixwerkstoff nicht vorkonsolidiert sind. Die Verstärkungsfasergebilde können sich bspw. in Faserart, Dicke, Vernetzungsform der Fasern, Imprägnierung oder Vorbehandlung der Fasern, sowie Zusätzen zur Schicht unterscheiden.

Die Dicke einer Schicht Verstärkungsfasergebilde liegt vor der Evakuierung des Halbzeugs bevorzugt zwischen 0,1 mm und 30 mm. Sie ist insbesondere davon abhängig, welche Fasern in welcher Dichte und welches Matrixmaterial zum Einsatz kommen. Der Fachmann berücksichtigt hier insbesondere, dass das Matrixmaterial im Konsolidierungsprozess das Verstärkungsfasergebilde möglichst vollständig und gleichmäßig durchdringen soll.

Die Wahl des Verstärkungsfasergebildes und dessen Ausbildung ist dabei bevorzugt der zu erwartenden Beanspruchungen des fertigen Bauteils angepasst. Bevorzugt werden verschiedene Arten von Faserstoff und Thermoplast in einem Halbzeug verwendet.

Als thermoplastischer Matrixwerkstoff kommen bevorzugt Folien, Pulver, thermoplastische Garne, Granulate, langfaserverstärkte Thermoplaste oder kurzfaserverstärkte Thermoplaste zum Einsatz. Dabei ist sowohl der ausschließliche Einsatz einer bestimmten Art von thermoplastischem Matrixwerkstoff aber auch die Nutzung verschiedener Arten in einem Bauteil bevorzugt.

Die Wahl des thermoplastischen Matrixwerkstoffs ist dabei der Art der zu erwartenden Beanspruchungen des fertigen Bauteils angepasst. Bevorzugt werden solche Thermoplaste verwendet, die eine gute Kaltumformbarkeit sowie Drapierbarkeit aufweisen. Bevorzugte Matrixwerkstoffe sind thermoplastische Polymere ausgewählt aus Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK), Polyvinylchlorid (PVC).

In einer ebenfalls bevorzugten Ausführungsform bestehen Ober- und Unterfolien selbst aus thermoplastischem Matrixwerkstoff. Dies ermöglicht vorteilhaft die rückstandsfreie Konsolidierung des Halbzeugs zu einem fertigen Bauteil aus Faserverbundwerkstoff. Dazu bestehen die Ober- und Unterfolien besonders bevorzugt aus dem gleichen thermoplastischen Matrixwerkstoff wie dem zur Konsolidierung des Verstärkungsfasergebildes genutzten.

Prinzipiell entsprechen Material und Ausbildung der eingesetzten Matrixwerkstoffe den aus dem Stand der Technik bekannten Werkstoffen für Faserverbundwerkstoffe.

Zwischen Ober- und Unterfolie ist eine Schichtfolge eingeschlossen, die im einfachsten Fall lediglich eine Schicht Verstärkungsfasergebilde, allgemein jedoch eine Abfolge verschiedener oder gleichartiger Schichten von Verstärkungsfasergebilde, Matrixmaterial, Gemisch von Verstärkungsfasergebilde und Matrixmaterial und thermo- oder duroplastische Folien und optional metallischen Einlegern aufweist. Die weiteren thermo- oder duroplastischen Folien sind nicht mit der Ober- oder Unterfolie identisch und trennen dabei ggf. einzelne Schichten oder Schichtfolgen voneinander.

Die Art der Werkstoffe von Verstärkungsfasergebilde, Matrixmaterial und optional metallischen Einleger kann schichtweise oder innerhalb einer Schicht variieren. Es sind somit auch erfindungsgemäße Halbzeuge bevorzugt, die Schichten aufweisen, die aus unterschiedlichen Faserstoffen bzw. Thermoplasten oder einer Mehrzahl von beidem bestehen. So können in dem Halbzeug bspw. Schichten vorliegen, die an einigen Stellen aus Verstärkungsfasern und an anderen aus Matrixwerkstoff gebildet sind. Somit kann eine Schicht aus Verstärkungsfasern oder Matrixmaterial bzw. Hybridmaterial auch nur eine Teilfläche des Halbzeugs einnehmen. Die Schichten können ebenso perforiert sein bzw. lokale Durchbrüche aufweisen. Vorteilhaft können somit die mechanischen oder auch optischen Eigenschaften des fertigen Produktes gezielt eingestellt werden.

Des Weiteren kann das Halbzeug jegliche geometrische Form aufweisen, also rund und/ oder eckig sein oder auch Durchbrüche aufweisen.

Die Schichtfolge weist optional mindestens eine Schicht mit metallischen Einlagen auf. Es kann sich um eine oder mehrere metallische Einlagen handeln. Diese metallischen Einlagen sind bevorzugt dort angeordnet, wo das aus dem Halbzeug herzustellende Bauteil gekrümmt ist, bzw. besonders hohe Beanspruchungen zu erwarten sind. Die metallischen Einlagen sind bevorzugt flach und rechteckig und hier besonders bevorzugt bandförmig oder quadratisch. Die Einleger können jedoch in Abhängigkeit der zu erzielenden Eigenschaften des herzustellenden Bauteils jegliche geometrische Form und Dicke aufweisen. Auch das Material der metallischen Einleger kann im Hinblick auf die zu erzielenden Eigenschaften für jeden Einleger bestimmt werden. Durch die Anordnung an Stellen, an denen das zu fertigenden Bauteil gekrümmt ist, können dementsprechend auch die metallischen Einlagen gekrümmt sein. Dies bewirkt vorteilhaft, dass das Halbzeug die bei der Anpassung der Geometrie aufgeprägte Krümmung auch über längere Lagerzeiträume und die zu erwartenden Beanspruchungen bei Lager- und Umschlagprozessen beibehält. Die metallischen Einlagen dienen weiterhin bevorzugt als lokale Versteifung oder zur Anbindung für Fügeelemente wie z. B. Verschraubungen. Vorzugsweise sind die metallischen Einlagen untereinander verbunden, so dass sie als gemeinsame Einlagenschicht in die Schichtfolge eingebracht werden können und nicht einzeln positioniert werden müssen. Dies erfolgt bevorzugt, indem wenigstens einige der metallischen Einlagen untereinander durch flexible Verbindungen (fadenförmige Verbindungen, Streifen aus Matrixmaterial oder Verstärkungsfasern oder ähnlichem) verknüpft sind. Eine weitere bevorzugte Ausführungsform sieht vor, dass die metallischen Einlagen auf einer Folie (die vorzugsweise aus Matrixmaterial besteht) aufgeklebt oder zwischen zwei derartige Folien einlaminiert sind.

Besonders bevorzugt sind die metallischen Einlagen auf einer oder mehreren Schichten der Schichtfolge vorpositioniert und angeheftet. Das Anheften kann bevorzugt mittels fadenförmigen Verbindern (Garn, Matrixmaterialfaden etc.) oder auch durch punktweises oder flächiges Aufkleben, vorzugsweise mit Matrixmaterial, erfolgen. Eine weitere besonders bevorzugte Ausführungsform sieht vor, dass eine andere Schicht, bevorzugt eine Schicht Verstärkungsfasergebilde taschenförmige oder röhrenförmige Ausnehmungen oder Schlitze aufweist, in die die metallischen Einlagen eingeschoben und dann gemeinsam mit der anderen Schicht in der Schichtfolge positioniert werden können.

In einer weiterhin bevorzugten Ausführungsform ist es jedoch auch möglich, die metallischen Einlagen einzeln und unabhängig voneinander in die Schichtfolge einzubringen und zu positionieren. Auch eine Mischform ist bevorzugt, bei der lediglich ein Teil der Einlagen untereinander verbunden ist. Die Schicht aus metallischen Einlagen besteht in einer bevorzugten Ausführungsform aus einer einzigen metallischen Einlage, die die flächigen Abmessungen der Schichtfolge aufweist.

Die metallischen Einlagen bestehen aus einem Metall bzw. einer Legierung, die gewährleistet, dass die Einlagen die aufgeprägte Form beibehalten und nicht in die Ausgangsform zurückfedern. Besonders bevorzugt sind metallische Einlagen aus Stahl, Aluminium und Magnesium. Die metallischen Einleger sind in einer bevorzugten Ausführungsform perforiert, aufgerauht und/oder oberflächenbehandelt.

Die Abmaße der metallischen Einlagen richtet sich nach der Form des Halbzeugs und den zu erwartenden Belastungen des Endproduktes, das aus dem Halbzeug hergestellt werden soll. Die Dicke der metallischen Einlagen ist so zu wählen, dass die Umformung des Halbzeugs aus einer annähernd ebenen in die gekrümmte Endform des Halbzeug erfolgen kann, ohne beim Umformprozess durch den Widerstand der metallischen Einlagen die weiteren Schichten der Schichtfolge oder die Unter- bzw. Oberfolie zu beschädigen. Eine bevorzugte Ausführungsform sieht Stahlstreifen aus allgemeinem Baustahl, Einsatzstahl oder Tiefziehstahl mit einer Dicke zwischen 0,05 mm und 1 mm vor.

Die Verbindung von Ober- und Unterfolien schließt das zwischen ihnen befindliche Volumen mit der Schichtfolge weitestgehend gasdicht, also druckhaltend, ein. Die Verbindung der Folien wird bei thermoplastischen Folien bevorzugt mittels Folienschweißverfahren nach dem Stand der Technik realisiert. Es sind aber auch Klebverfahren geeignet. Weiterhin bevorzugt sind Bördeln oder Umschlagen, die vorteilhaft mit Klemmverfahren bspw. mittels Klemmschienen kombiniert werden.

Erfindungsgemäß ist das weitestgehend gasdicht eingeschlossene Volumen evakuiert. Die Schichtfolge ist somit weitgehend oder teilweise entlüftet. Vorzugsweise liegen keine Gaseinschlüsse oder abgedichteten Unterkavitäten innerhalb des weitgehend gasdicht eingeschlossenen Volumens vor. Die Evakuierung erfolgt mit einem aus dem Stand der Technik bekannten Verfahren, besonders bevorzugt mittels einer Evakuierungsschweißglocke.

Auf den Einsatz von Klebstoffen, Bindern oder eine Vorkonsolidierung von Matrixwerkstoff und Verstärkungsfasergebilde zur Verbindung der einzelnen Schichten kann somit vorteilhaft vollständig verzichtet werden. Das Halbzeug hat somit erfindungsgemäß einen trockenen Schichtaufbau, der relative Bewegungen zwischen den einzelnen Schichten zulässt.

In einer bevorzugten Ausführungsform sind zwei oder mehrere Schichten der Schichtfolge durch Fäden oder Garne zusammengeheftet. Dies verhindert vorteilhaft weitgehend eine Verschiebung der Schichten gegeneinander, während die Schichtfolge zwischen der Ober- und der Unterfolie oder in dem Werkzeug zur Formgebung vor der Evakuierung drapiert wird.

In einer bevorzugten Ausführungsform werden für die Ober- und Unterfolien Werkstoffe gewählt, die spezifische, für die Oberfläche des fertigen Bauteils bevorzugte Eigenschaften aufweisen. Dabei kann es sich sowohl um spezielle thermoplastische Werkstoffe, bspw. mit hoher Kratzresistenz, oder auch um andere Werkstoffe, bspw. schmelzfeste Folien, handeln. Die ebenfalls bevorzugte Nutzung schmelzfester Folien führt zu einer Begrenzung des Reaktionsraums bei der Konsolidierung, die bevorzugt ohne zusätzliche Form durchführbar ist.

Das zwischen den Folien befindliche evakuierte Volumen hält seinen Unterdruck auch über lange Zeiträume, so dass auch nach langer Lagerung Lufteinschlüsse bei der Bauteilerzeugung vermieden werden. Dies begründet eine hohe Lagerbeständigkeit des Halbzeugs. Das erfindungsgemäße Halbzeug stellt somit vorteilhaft ein in Hinblick auf Schichtabfolge, Schichtdicke sowie Flächenmaß variables sowie lagerfähiges Halbzeug zur Erzeugung lufteinschlussfreier Bauteile mit sehr guten optischen und mechanischen Eigenschaften dar.

Die nunmehr mögliche Erzeugung von ebenen oder von vorgeformten Halbzeugen mit belastungsangepassten Eigenschaften erfordert vorteilhaft weniger Aufwand bei der Werkzeugbefüllung und Konsolidierung. In dem erfindungsgemäßen Halbzeug sind die gewünschten Bauteileigenschaften schon vor der Konsolidierung angelegt.

Auch funktionelle Elemente des Bauteils können vorteilhaft durch eine gezielte Ausgestaltung des Halbzeugs bereits vor der Konsolidierung integriert werden. Dazu sind zwischen Ober- und Unterfolie bevorzugt zusätzlich Elektronikelemente für Leiterbahnen und/oder Online-Diagnosesysteme, endkonturnahe Halbzeuge (Schäume), metallische Bleche, Verbindungsmöglichkeiten zu anderen Bauteilen und/oder konsolidierte duroplastische Verstärkungsfasergebilde eingefügt.

Insofern derartige zusätzlich eingebrachte Elemente aus dem von Ober- und/oder Unterfolie abgedeckten Bereich herausragen, sind diese Elemente so in die Verbindung von Ober- und Unterfolie integriert, dass das zwischen den Folien befindliche Volumen weiterhin weitestgehend gasdicht eingeschlossen ist. Derartiges ist bspw. zur Kontaktierung von Leiterbahnen oder zur Verbindung von zwei Bauteilen notwendig. Die Folien werden dann an diese hinausstehenden Elemente vorzugsweise gasdicht angeschweißt oder angeklebt.

Gegenstand der Erfindung ist das Verfahren zur Herstellung des schichtförmigen Halbzeugs nach Anspruch 1 oder 4.

### A. Verfahren zur Herstellung eines ebenen schichtförmigen Halbzeugs, optional mit metallischen Einlegern

Es sind die folgenden drei Teilschritte auszuführen:
- Aufbau eines ebenen Stapels aus der ebenen Schichtfolge zwischen Ober- und Unterfolie,
- Evakuierung des Volumens zwischen Ober- und Unterfolie
- weitestgehend gasdichter Einschluss des Volumens zwischen Ober- und Unterfolie.

Verfahrensweisen zum Einbringen und Anpassen der Schichtfolge zwischen Ober- und Unterfolie in die Form:
a) In einer ersten bevorzugten Verfahrensweise wird eine thermoplastische Unterfolie ausgelegt. Anschließend werden die einzelnen oder vorverbundenen Schichten des Schichtaufbaus oder der gesamte vorbereitete Schichtaufbau auf der Unterfolie aufgelegt. Die Schichten weisen dabei in einer bevorzugten Ausführungsform einen oder mehrere metallische Einleger auf. Danach wird die thermoplastische Oberfolie über der Schichtfolge drapiert. Sollten vorverbundene Schichten zum Einsatz kommen, so sind diese vorzugsweise mit einem Faden oder Garn (das auch Matrixmaterial enthalten kann) zusammengeheftet, so dass sie noch gegeneinander verschiebbar sind, sich jedoch nicht vollständig voneinander lösen oder übermäßig verschieben können.
b) Eine zweite bevorzugte Verfahrensweise sieht vor, dass die Schichtfolge, die optional metallische Einleger enthält, zwischen zwei thermoplastischen Folien so angeordnet wird, dass diese die Schichtfolge mit allseitigem seitlichen Überstand als Ober- und Unterfolie bedecken. Anschließend werden Ober- und Unterfolie teilweise miteinander verbunden. Es bleiben jedoch ein oder mehrere Zugänge zu dem eingeschlossenen Volumen erhalten. Eine bevorzugte Weiterbildung dieser Verfahrensweise sieht vor, dass der bzw. die verbliebenen Zugänge mit Anschlussstücken zum Anschluss der Abpumpvorrichtung zur Evakuierung des Volumens zwischen Ober- und Unterfolie versehen werden. Dazu wird bevorzugt ein Anschlussstück (bspw. ein Schlauch) zwischen Ober- und Unterfolie eingelegt und diese anschließend bis zu dem Anschlussstück miteinander und dort mit dem Anschlussstück verbunden. Das Anschlussstück bildet somit den Zugang für die Evakuierung.
c) Eine dritte bevorzugte Verfahrensweise sieht vor, dass die Schichtfolge, die optional metallische Einleger enthält, zwischen zwei thermoplastischen Folien so angeordnet wird, dass diese die Schichtfolge mit allseitigem seitlichen Überstand als Ober- und Unterfolien bedecken. Anschließend werden Ober- und Unterfolie vollständig umlaufend miteinander verbunden. Anschließend werden ein oder mehrere Anschlusstücke zur Evakuierung des eingeschlossenen Volumens eingebracht, indem diese die Ober- oder Unterfolie durchstoßen.

Die Ober- und Unterfolien weisen in jeder der Verfahrensweisen a) bis c) einen allseitigen seitlichen Überstand gegenüber der Schichtfolge auf. Besteht die Schichtfolge aus Schichten verschiedener Einzelabmessungen, stehen Ober- und Unterfolie über die größten Einzelabmessungen über. Die seitlichen Überstände von Ober- und Unterfolie sind so groß gewählt, dass die Überstände im weiteren Verfahrensverlauf umlaufend miteinander verbunden werden können. Die überstehenden Ränder von Ober- und Unterfolie werden optional bis auf diesen notwendigen Überstand um die Kontur der ausgedehntesten Schicht beschnitten. Die Kontur der Schnittkante kann dabei der Abmessung des Stapels aus Ober- und Unterfolie sowie Schichtfolge, bzw. der Kontur der ausgedehntesten Schicht folgen oder einen anderen Verlauf aufweisen. Die Verbindung von Ober- und Unterfolien erfolgt bevorzugt durch Schweißen, Kleben, Umformen, Bördeln oder Umschlagen.

### Verfahrensweisen zur Evakuierung des Volumens und zum weitestgehend gasdichten Einschluss zwischen Ober- und Unterfolie bei der Herstellung eines ebenen schichtförmigen Halbzeugs mit optionalen metallischen Einlegern

Folgende Verfahrensweisen zur Evakuierung des Halbzeuges und zum weitestgehend gasdichten Einschluss zwischen Ober- und Unterfolie sind bevorzugt:
a) In einer bevorzugten Verfahrensweise wird dazu der ebene Stapel aus Ober- und Unterfolie sowie dazwischen befindlicher Schichtfolge, die optional metallische Einleger enthält, gemeinsam in einem hermetischen Raum abgelegt und dieser evakuiert. Alternativ kann das Halbzeug auch in einen bereits evakuierten Raum eingeschleust werden. Der Evakuierungsgrad des Stapels kann dabei über den Evakuierungsgrad des Raumes individuell eingestellt werden, wobei ein möglichst vollständig evakuierter Raum besonders bevorzugt ist. Dieses Vorgehen ist für alle nach Verfahrensweisen a) b) und c) vorbereitete Stapel geeignet. Der Stapel wird dabei optional von einem geeigneten Werkzeug zusammengedrückt, wodurch vorteilhaft die Luft zusätzlich aus dem Stapel herausgedrückt wird. Die Verbindung der überstehenden Ränder von Ober- und Unterfolie erfolgt dann vorzugsweise innerhalb des evakuierten Raums, um ein erneutes Eindringen von Gas in den Schichtaufbau zu vermeiden. Erst nach der vollständigen Verbindung von Ober- und Unterfolie und dem gasdichten Einschluss des dazwischen befindlichen Volumens wird das Werkzeug gelöst und das Halbzeug aus dem hermetischen Raum entnommen oder ausgeschleust bzw. dieser wieder auf Umgebungsdruck gebracht.
   Erfolgt die Verbindung der überstehenden Ränder von Ober- und Unterfolie ohne dass der Stapel durch ein Werkzeug zusammengepresst wird, wird der Stapel erst nach dem Belüften des hermetischen Raumes durch den Luftdruck zusammengepresst und so in seiner Höhe reduziert.
b) In einer weiterhin bevorzugten Ausführungsform die insbesondere für nach Verfahrensweise b) in vorbereitete Stapel geeignet ist, wird durch den mindestens einen offenen Zugang bzw. das Anschlussstück das eingeschlossene Volumen anschließend evakuiert. Um das erneute Eindringen von Gasen in das evakuierte Volumen zu verhindern, werden Ober- und Unterfolien anschließend vollständig verbunden und das eingeschlossene Volumen weitestgehend gasdicht eingeschlossen. Ähnliche Verfahrensweisen sind vom Vakuumversiegeln von Lebensmitteln bekannt. Für den Fall, dass der mindestens eine offene Zugang mit einem Anschlussstück versehen ist, an dem die Vorrichtung zur Evakuierung (Abpumpvorrichtung) angeschlossen wurde, kann das Anschlussstück nach der Evakuierung verschlossen werden. Dies kann entweder irreversibel, bspw. durch Verkleben, oder Verschmelzen des Anschlussstückes oder auch reversibel erfolgen, indem das Anschlussstück mit einem Absperrhahn, einem Verschlussstöpsel oder einer Verschlussklemme ausgestattet ist. Bei einem reversiblen Verschluss kann das eingeschlossene Volumen des Halbzeug besonders leicht wieder belüftet oder mit einem sonstigen Fluid (Gas und/oder Flüssigkeit) befüllt werden. Bevorzugt besteht das Anschlussstück aus demselben Material wie Ober- und Unterfolien und kann daher ebenso wie diese verschlossen werden, wodurch ein einheitliches Halbzeug entsteht.
c) In einer weiterhin bevorzugten Ausführungsform die insbesondere für nach Verfahrensweise c) vorbereitete Stapel geeignet ist, wird zur Evakuierung in das zwischen Ober- und Unterfolien weitestgehend gasdicht eingeschlossene Volumen mindestens eine Abpumpvorrichtung, bevorzugt eine Evakuierungsglocke, eingeführt, wobei Ober- und/oder Unterfolie durchdrungen werden. Mit dieser Abpumpvorrichtung wird ein Unterdruck erzeugt und das Volumen evakuiert. Anschließend werden die Zugangsöffnungen der Abpumpvorrichtungen wieder weitestgehend gasdicht verschlossen. Dies erfolgt bspw. durch Verschweißung von Ober- und Unterfolie, durch Verschweißung der Folien miteinander oder durch Aufbringen eines zusätzlichen Folienstücks.
   Bevorzugt sind für das Einführen der Abpumpvorrichtungen spezielle Folienstücke, bspw. Ausbuchtungen der überstehenden Ränder, vorgesehen.

Die Verdrängung der Luft aus dem Stapel aus Ober- und Unterfolie sowie dazwischen befindlicher Schichtfolge, die optional metallische Einleger enthält, erfolgt bevorzugt mechanisch. Dabei wird die Luft mit einem Stempel, Kissen oder einer anderen mechanischen Einrichtung in Richtung der überstehenden Ränder von Ober- und Unterfolien verdrängt. Besonders bevorzugt wird der Stapel dazu auf eine Temperatur erhitzt, die noch unterhalb der Schmelz-/Reaktionstemperatur des Matrixmaterials liegt. Dadurch dehnt sich die in dem Stapel befindliche Luft aus und kann leichter aus diesem verdrängt werden. Die Verbindung der überstehenden Ränder von Ober- und Unterfolie erfolgt bevorzugt ebenfalls bei dieser erhöhten Temperatur. Ist das Volumen zwischen Ober- und Unterfolien weitestgehend gasdicht eingeschlossen, wird der Stapel abgekühlt und somit der Druck im Halbzeug verringert.

In allen Varianten des erfindungsgemäßen Verfahrens nach A. wird während des Evakuierungsvorgangs des zwischen Ober- und Unterfolien befindlichen Volumens optional ein Niederhalter auf diese Folien sowie die dazwischen befindlichen Schichten gedrückt.

Besonders bevorzugt wird eine mechanische Verdrängung der Luft aus dem eingeschlossenen Volumen mit einer Evakuierung mittels einer Abpumpvorrichtung kombiniert.

Abhängig vom Material von Ober- und Unterfolien erfolgt das Abtrennen von überstehendem Material dieser Folien sowohl nach deren Verbindung als auch vor der Ablage derselben im diskontinuierlichen Verfahren des Schichtaufbaus mittels Scheren, Cuttern, Laserschneidvorrichtungen, thermisch oder durch Stanzen. Das Abtrennen der überstehenden Ränder nach dem Verbinden von Ober- und Unterfolien erfolgt bevorzugt nah an der Verbindungslinie der beiden Folien. In einer besonders bevorzugten Vorgehensweise erfolgt das Beschneiden der Überstände von thermoplastischen Ober- und Unterfolien in einem Werkzeug gemeinsam mit deren Verschweißen.

### B. Verfahren zur Herstellung eines vorgeformten schichtförmigen Halbzeugs

Es sind die folgenden vier Teilschritte auszuführen:
- Einbringen der Schichtfolge zwischen Ober- und Unterfolie
- Anpassen der Schichtfolge zwischen Ober- und Unterfolie an die einfach oder mehrfach gekrümmte Form, die dem Halbzeug die angestrebte Ausformung verleihen soll.
- Evakuierung des Volumens zwischen Ober- und Unterfolie
- weitestgehend gasdichter Einschluss des Volumens zwischen Ober- und Unterfolie

Verfahrensweisen zum Einbringen und Anpassen der Schichtfolge zwischen Ober- und Unterfolie in die Form:
a) In einer ersten bevorzugten Verfahrensweise wird eine thermoplastische Unterfolie in die Form eingelegt und dieser angepasst. Anschließend werden die einzelnen oder vorverbundenen Schichten des Schichtaufbaus oder der gesamte vorbereitete Schichtaufbau in Form eingelegt und dieser angepasst. Danach wird die thermoplastische Oberfolie in die Form eingelegt und dieser angepasst. Sollten vorverbundene Schichten zum Einsatz kommen, so sind diese vorzugsweise mit einem Faden oder Garn (das auch Matrixmaterial enthalten kann) zusammengeheftet, so dass sie noch gegeneinander verschiebbar sind, sich jedoch nicht vollständig voneinander lösen oder übermäßig verschieben können.
b) In einer zweiten bevorzugten Verfahrensweise werden thermoplastische Folien so zurechtgeschnitten, dass sie eine Schichtfolge mit allseitigem seitlichen Überstand als Ober- und Unterfolien bedecken. Anschließend werden Ober- und Unterfolien und die Schichtfolge gemeinsam in die Form eingelegt und dieser angepasst.
c) Eine dritte bevorzugte Verfahrensweise sieht vor, dass die Schichtfolge zwischen zwei thermoplastischen Folien so angeordnet wird, dass diese die Schichtfolge mit allseitigem seitlichen Überstand als Ober- und Unterfolie bedecken. Anschließend werden Ober- und Unterfolie teilweise miteinander verbunden. Es bleiben jedoch ein oder mehrere Zugänge zu dem eingeschlossenen Volumen erhalten. Anschließend werden Ober- und Unterfolie mit der eingeschlossenen Schichtfolge in die Form eingelegt und dieser angepasst. Eine bevorzugte Weiterbildung dieser Verfahrensweise sieht vor, dass der bzw. die verbliebenen Zugänge mit Anschlussstücken zum Anschluss der Abpumpvorrichtung zur Evakuierung des Volumens zwischen Ober- und Unterfolie versehen werden. Dazu wird bevorzugt ein Anschlussstück (bspw. ein Schlauch) zwischen Ober- und Unterfolie eingelegt und diese anschließend bis zu dem Anschlussstück miteinander und dort mit dem Anschlussstück verbunden. Das Anschlussstück bildet somit den Zugang für die Evakuierung.
d) Eine vierte bevorzugte Verfahrensweise sieht vor, dass die Schichtfolge zwischen zwei thermoplastischen Folien so angeordnet wird, dass diese die Schichtfolge mit allseitigem seitlichen Überstand als Ober- und Unterfolien bedecken. Anschließend werden Ober- und Unterfolie vollständig umlaufend miteinander verbunden. Anschließend werden ein oder mehrere Anschlusstücke zur Evakuierung des eingeschlossenen Volumens eingebracht, indem diese die Ober- oder Unterfolie durchstoßen. Anschließend werden Ober- und Unterfolien mit der eingeschlossenen Schichtfolge in die Form eingelegt und dieser angepasst.

Die Ober- und Unterfolien weisen in jeder der Verfahrensweisen a) bis d) einen allseitigen seitlichen Überstand gegenüber der Schichtfolge auf. Besteht die Schichtfolge aus Schichten verschiedener Einzelabmessungen, stehen Ober- und Unterfolie über die größten Einzelabmessungen über. Die seitlichen Überstände von Ober- und Unterfolie sind so groß gewählt, dass die Überstände im weiteren Verfahrensverlauf umlaufend miteinander verbunden werden können. Die überstehenden Ränder von Ober- und Unterfolie werden optional bis auf diesen notwendigen Überstand um die Kontur der ausgedehntesten Schicht beschnitten. Die Kontur der Schnittkante kann dabei der Abmessung des Stapels aus Ober- und Unterfolie sowie Schichtfolge, bzw. der Kontur der ausgedehntesten Schicht folgen oder einen anderen Verlauf aufweisen. Die Verbindung von Ober- und Unterfolien erfolgt bevorzugt durch Schweißen, Kleben, Umformen, Bördeln oder Umschlagen.

Die Anpassung an die Form erfolgt bevorzugt, indem ein (unter Berücksichtigung der Dicke des Stapels) formideales Gegenstück als Niederhalter zu der Form den Stapel in die Form einpresst. Bei einer geringen Komplexität der einfach oder mehrfach gekrümmten Form kommt vorzugsweise ein Presskissen oder eine aufblasbarer Balg zum Einpressen des Stapels in die Form zum Einsatz. Prinzipiell geeignet zum Einbringen des Stapels in die Form sind auch weitere aus dem Stand der Technik bekannte Verfahren zum Einbringen biegeschlaffer flächiger Körper in Formen.

### Verfahrensweisen zur Evakuierung des Volumens und zum weitestgehend gasdichten Einschluss zwischen Ober- und Unterfolie bei der Herstellung eines vorgeformten schichtförmigen Halbzeugs

Nach dem Einbringen des Stapels aus Ober- und Unterfolie sowie dazwischen angeordneter Schichtfolge in die Form wird das Volumen zwischen der Ober- und der Unterfolie evakuiert und weitestgehend gasdicht verschlossen.
a) In einer bevorzugten Verfahrensweise wird dazu der Stapel aus Ober- und Unterfolie sowie dazwischen befindlicher Schichtfolge gemeinsam mit der Form in einem hermetischen Raum abgelegt und dieser evakuiert. Der Evakuierungsgrad des Stapels kann dabei über den Evakuierungsgrad des Raumes individuell eingestellt werden, wobei ein vollständig evakuierter Raum besonders bevorzugt ist. Dieses Vorgehen ist insbesondere für nach Verfahrensweisen a) b) und c) in die Form eingebrachte Stapel geeignet. Der Stapel wird dabei optional von einem geeigneten Werkzeug zusammengedrückt, dass der Form unter Berücksichtigung der Stapeldicke formideal entspricht. Die Verbindung der überstehenden Ränder von Ober- und Unterfolie erfolgt dann vorzugsweise innerhalb des evakuierten Raums, um ein erneutes Eindringen von Gas in den Schichtaufbau zu vermeiden. Erst nach der vollständigen Verbindung von Ober- und Unterfolie und dem gasdichten Einschluss des dazwischen befindlichen Volumens wird das formideale Werkzeug gelöst und das Halbzeug aus dem hermetischen Raum und der Form entnommen bzw. dieser wieder auf Umgebungsdruck gebracht.
   Erfolgt die Verbindung der überstehenden Ränder von Ober- und Unterfolie ohne dass der Stapel durch ein Werkzeug zusammengepresst wird, wird der Stapel erst nach dem Belüften des hermetischen Raumes durch den Luftdruck zusammengepresst und so in seiner Höhe reduziert.
b) In einer weiterhin bevorzugten Ausführungsform, die insbesondere für nach Verfahrensweise c) in die Form eingebrachte Stapel geeignet ist, wird durch den mindestens einen offenen Zugang das eingeschlossene Volumen anschließend evakuiert. Um das erneute Eindringen von Gasen in das evakuierte Volumen zu verhindern, werden Ober- und Unterfolien anschließend vollständig verbunden und das eingeschlossene Volumen weitestgehend gasdicht eingeschlossen. Ähnliche Verfahrensweisen sind vom Vakuumversiegeln von Lebensmitteln bekannt. Für den Fall, dass der mindestens eine offene Zugang mit einem Anschlussstück versehen ist, an dem die Vorrichtung zur Evakuierung angeschlossen wurde, kann das Anschlussstück nach der Evakuierung verschlossen werden. Dies kann entweder irreversibel, bspw. durch Verkleben, oder Verschmelzen des Anschlussstückes oder auch reversibel erfolgen, indem das Anschlussstück mit einem Absperrhahn, einem Verschlussstöpsel oder einer Verschlussklemme ausgestattet ist. Bei einem reversiblen Verschluss kann das eingeschlossene Volumen des Halbzeug besonders leicht wieder belüftet oder mit einem sonstigen Fluid (Gas und/oder Flüssigkeit) befüllt werden. Bevorzugt besteht das Anschlussstück aus demselben Material wie Ober-und Unterfolien und kann daher ebenso wie diese verschlossen werden, wodurch ein einheitliches Halbzeug entsteht.
c) In einer weiterhin bevorzugten Ausführungsform die insbesondere für nach Verfahrensweise d) in die Form eingebrachte Stapel geeignet ist, wird zur Evakuierung in das zwischen Ober- und Unterfolien weitestgehend gasdicht eingeschlossene Volumen mindestens eine Abpumpvorrichtung, bevorzugt einer Evakuierungsglocke, eingeführt, wobei Ober- und/oder Unterfolie durchdrungen werden. Mit dieser Abpumpvorrichtung wird ein Unterdruck erzeugt und das Volumen evakuiert. Anschließend werden die Zugangsöffnungen der Abpumpvorrichtungen wieder weitestgehend gasdicht verschlossen. Dies erfolgt bspw. durch Verschweißung von Ober- und Unterfolie, durch Verschweißung der Folien miteinander oder durch Aufbringen eines zusätzlichen Folienstücks.
   Bevorzugt sind für das Einführen der Abpumpvorrichtungen spezielle Folienstücke, bspw. Ausbuchtungen der überstehenden Ränder, vorgesehen.

Die Verdrängung der Luft aus dem Stapel aus Ober- und Unterfolie sowie dazwischen befindlicher Schichtfolge erfolgt bevorzugt mechanisch. Dabei wird die Luft mit einem Stempel, Kissen oder einer anderen mechanischen Einrichtung in Richtung der überstehenden Ränder von Ober- und Unterfolien verdrängt. Besonders bevorzugt wird der Stapel dazu auf eine Temperatur erhitzt, die noch unterhalb der Schmelz-/Reaktionstemperatur des Matrixmaterials liegt. Dadurch dehnt sich die in dem Stapel befindliche Luft aus und kann leichter aus diesem verdrängt werden. Die Verbindung der überstehenden Ränder von Ober- und Unterfolie erfolgt bevorzugt ebenfalls bei dieser erhöhten Temperatur. Ist das Volumen zwischen Ober- und Unterfolien weitestgehend gasdicht eingeschlossen, wird der Stapel abgekühlt und somit der Druck im Halbzeug verringert.

In allen Varianten des erfindungsgemäßen Verfahrens wird während des Evakuierungsvorgangs des zwischen Ober- und Unterfolien befindlichen Volumens optional ein Niederhalter auf diese Folien sowie die dazwischen befindlichen Schichten gedrückt.

Besonders bevorzugt wird eine mechanische Verdrängung der Luft aus dem eingeschlossenen Volumen mit einer Evakuierung mittels einer Abpumpvorrichtung kombiniert.

Abhängig vom Material von Ober- und Unterfolien erfolgt das Abtrennen von überstehendem Material dieser Folien sowohl nach deren Verbindung als auch vor der Ablage derselben im diskontinuierlichen Verfahren des Schichtaufbaus mittels Scheren, Cuttern, Laserschneidvorrichtungen, thermisch oder durch Stanzen. Das Abtrennen der überstehenden Ränder nach dem Verbinden von Ober- und Unterfolien erfolgt bevorzugt nah an der Verbindungslinie der beiden Folien. In einer besonders bevorzugten Vorgehensweise erfolgt das Beschneiden der Überstände von thermoplastischen Ober- und Unterfolien in einem Werkzeug gemeinsam mit deren Verschweißen.

### Ausführungsbeispiel

### A. Ausführungsbeispiel für ebenes schichtförmiges Halbzeug

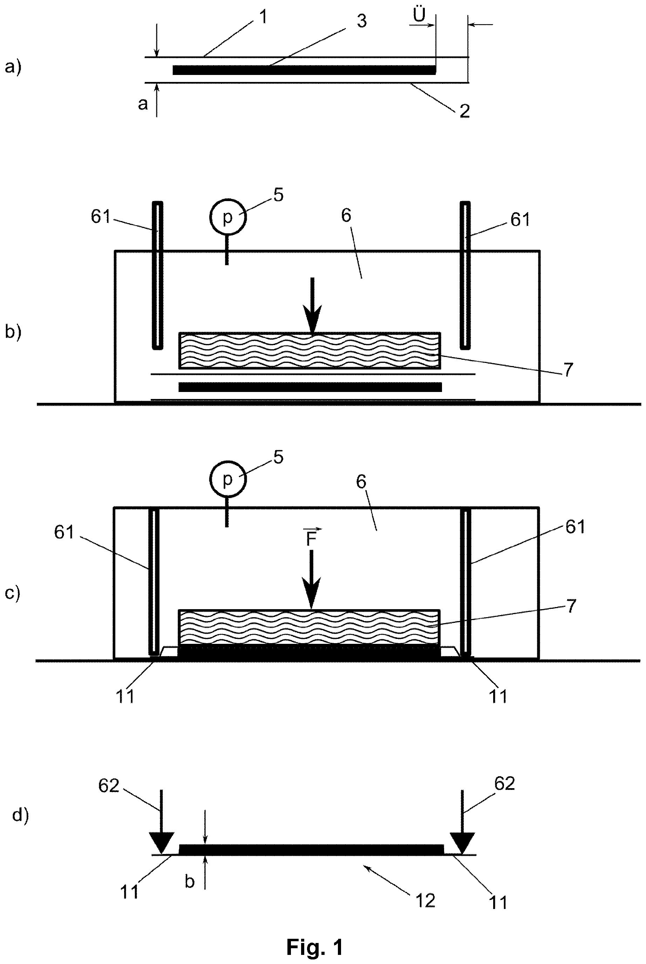

Die Fig. 1 zeigt ein nicht-erfindungsgemäßes Verfahren in der Variante b) der Verfahrensweise zum Einbringen der Schichtfolge zwischen Ober- und Unterfolie sowie Variante a) zur Evakuierung des Volumens und zum weitestgehend gasdichten Einschluss zwischen Ober-und Unterfolie.

Bei Ober- und Unterfolie handelt es sich um Folien aus Matrixmaterial (PA6 - Polyamidfolien mit einer Materialdicke von 0,1 mm und Abmessungen von 600 mm x 600 mm). Der Aufbau der Schichtfolge zwischen Ober- und Unterfolie sieht sechs Folienschichten vor, zwischen denen fünf Verstärkungsfasergebildeschichten angeordnet sind. Die Schichtfolge ist alternierend. Als Verstärkungsfasermaterial kommen Schichten von Kohlefasergewebe zum Einsatz. Das Kohlefasergewebe hat eine Flächenmasse von 285 g/m², die Abmaße betragen 570 mm x 570 mm. Die Folienschichten bestehen ebenfalls aus PA6 Folie (0,1 mm dick; Abmaße 570 mm x 570 mm). Der Stapel weist somit an Ober- und Unterseite zwei übereinanderliegende PA6-Folien auf, zwischen denen dann Verstärkungsfasergebildeschichten und Folien abwechselnd angeordnet sind. Der rechnerische Faservolumengehalt beträgt ca. 50%.

In Schritt a) werden die Unterfolie (1), die Schichten der Schichtfolge (3), sowie die Oberfolie (2) nacheinander aufeinander abgelegt. Die Unter- (1) und die Oberfolie (2) weisen einen Überstand (Ü) von allseitig 1,5 mm über den Rand der Schichtfolge (3) auf. Die Höhe (a) des Stapels ergibt sich aus der unkomprimierten Schichtfolge und der Dicke der Folien und beträgt ca. 2,2 mm.

Im nächsten Verfahrensschritt (b) wird der Stapel in die Vakuumkammer (6) eingebracht.

Im darauffolgenden Schritt c) wird der Stapel mit dem Werkzeug (7) zusammengepresst, so dass in dem Stapel keine bzw. nur noch sehr wenig Luft enthalten ist. Zeitgleich wird die Vakuumkammer (6) über die Abpumpvorrichtung (5) evakuiert. Anschließend werden die überstehenden Kanten (Ü) umlaufend miteinander mittels des Werkzeugs (61) verschweißt.

Nach dem Belüften der Vakuumkammer (6) und der Öffnung des Werkzeugs (7) wird das fertige Halbzeug (12) entnommen (Verfahrensschritt d)). Da im Inneren des von Ober- (2) und Unterfolie (1) umschlossenen Volumens ein sehr viel geringerer Druck als der Luftdruck herrscht, werden die einzelnen Lagen des Stapels aufeinander gepresst. Sie können sich so kaum gegeneinander verschieben. Nunmehr wird der Rest des überstehenden Randes außerhalb der umlaufenden Schweißnaht mit dem Werkzeug (62) beschnitten. Das so vorgeformte Halbzeug ist lagerbar.

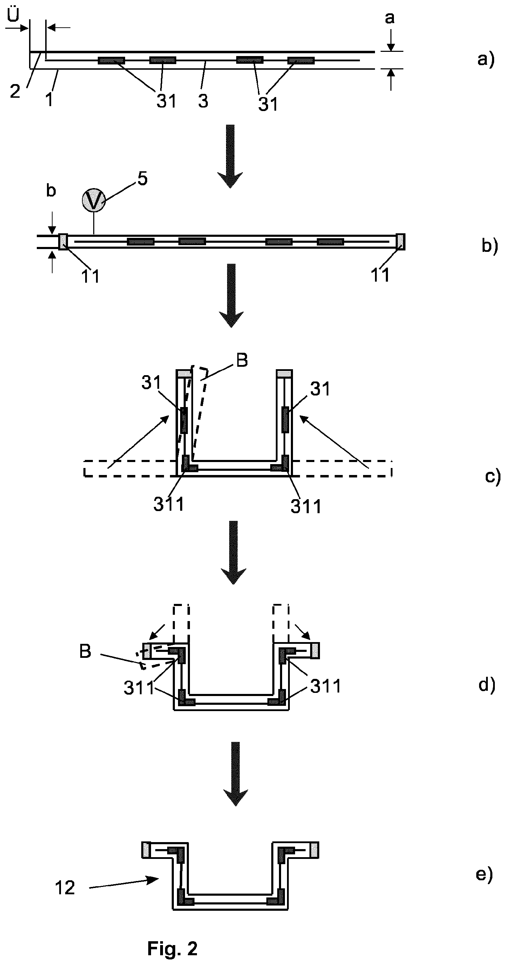

Die **Fig. 2** zeigt das erfindungsgemäße Verfahren in der Ausführungsform mit metallischen Einlegern. In Schritt a) wird der Stapel aus Unterfolie (1), Oberfolie (2) und dazwischenliegender Schichtfolge (3) aufgebaut, indem die einzelnen Schichten übereinandergelegt werden. Die Ober- (2) und die Unterfolie (1) bestehen aus Polyacryl PA6 Folie (0,1 mm dick); Abmaße 600 mm x 600 mm. Der Schichtstapel (3) weist fünf Schichten aus Kohlefaser-Gewebe (Verstärkungsfasergebilde) mit einer Flächenmasse von 285 g/m², sieben Schichten aus PA6 Folie (0,1 mm dick) und einer Schicht mit vier Stahlstreifen (31) der Abmaße 570 mm x 100 mm x 0,25 mm auf. In der Schichtfolge wechseln jeweils eine Folienschicht mit einer Kohlefaser-Gewebeschicht ab. In der Mitte der Schichtfolge sind anstelle der Kohlefaser-Gewebeschicht die vier Stahlstreifen zwischen zwei Folienschichten eingelegt. Die Kohlefaser-Gewebeschichten und die Folienschichten der Schichtfolge haben jeweils Abmaße von 570 mm x 570 mm. Die Ober- (2) und die Unterfolien (1) weisen jeweils einen Überstand (Ü) auf. Die Höhe (a) des Stapels beträgt ca. 2,2 mm.

In Schritt b) ist schematisch dargestellt, wie die Überstande (Ü) von Ober- (2) und Unterfolie (1) umlaufend miteinander verschweißt werden und nachfolgend mittels der Absaugvorrichtung 5 das eingeschlossene Volumen zwischen Ober- (2) und Unterfolie (1) evakuiert wird. Aufgrund des umgebenden Luftdrucks wird der Schichtstapel auf die Höhe (b) von 1,8 mm zusammengepresst. Nach dem Entfernen der Absaugvorrichtung (5) wird die Öffnung, an der diese angesetzt war, verschlossen. Das ebene Halbzeug ist nach dem Schritt b) fertiggestellt. Das Halbzeug kann nun gelagert und zum Einsatzort transportiert werden.

Schritte c) und d) zeigen Möglichkeiten einer weiteren Verarbeitung.

Schritt c) zeigt, wie das Halbzeug so abgekantet wird, dass die Krümmung in den metallischen Einlagen (311) erzeugt wird. Schematisch ist dargestellt, wie durch das Überbiegen (B) der Rückfederungseffekt der metallischen Einlagen kompensiert wird.

In Schritt d) werden auch die verbliebenen metallischen Einlagen (311) gebogen, wieder mit Überbiegen (B).

Schritt e) zeigt nun bereits an die Geometrie des Werkzeuges zum Konsolidieren angepasste Halbzeug.

### B. Ausführungsbeispiel für vorgeformtes schichtförmiges Halbzeug

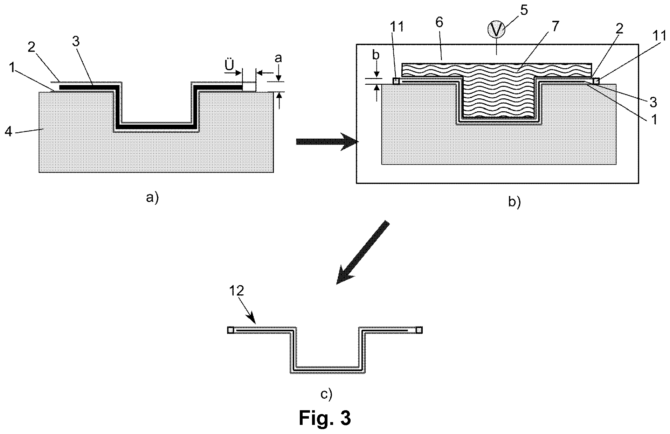

Die **Fig. 3** zeigt ein nicht-erfindungsgemäßes Verfahren in der Variante b) der Verfahrensweise zum Einbringen und Anpassen der Schichtfolge zwischen Ober- und Unterfolie in die Form sowie Variante a) zum Evakuierung des Volumens und zum weitestgehend gasdichten Einschluss zwischen Ober- und Unterfolie.

Bei Ober- und Unterfolie handelt es sich um Folien aus Matrixmaterial (PA6 - Polyamidfolien mit einer Materialdicke von 0,1 mm und Abmessungen von 600 mm x 600 mm). Der Aufbau der Schichtfolge zwischen Ober- und Unterfolie sieht sechs Folienschichten vor, zwischen denen fünf Verstärkungsfasergebildeschichten angeordnet sind. Die Schichtfolge ist alternierend. Als Verstärkungsfasermaterial kommen Schichten von Kohlefasergewebe zum Einsatz. Das Kohlefasergewebe hat eine Flächenmasse von 285 g/m², die Abmaße betragen 570 mm x 570 mm. Die Folienschichten bestehen ebenfalls aus PA6 Folie (0,1 mm dick; Abmaße 570 mm x 570 mm). Der Stapel weist somit an Ober- und Unterseite zwei übereinanderliegende PA6-Folien auf, zwischen denen dann Verstärkungsfasergebildeschichten und Folien abwechselnd angeordnet sind. Der rechnerische Faservolumengehalt beträgt ca. 50%.

In Schritt a) werden die Unterfolie (1), die Schichten der Schichtfolge, sowie die Oberfolie (2) nacheinander in der Form (4) abgelegt. Die Unter- und die Oberfolien weisen einen Überstand (Ü) von allseitig 1,5 mm über den Rand der Schichtfolge (3) auf. Die Höhe (a) des Stapels ergibt sich aus der unkomprimierten Schichtfolge und der Dicke der Folien und beträgt ca 2,2 mm. Die Tiefe der Kavität in der Form (4) ist in Figur 1 aus Gründen der Darstellbarkeit überhöht. Sie beträgt in der tatsächlichen Ausführung 18 mm, und ist kreisförmig, mit einem Durchmesser von 240 mm.

Im nächsten Verfahrensschritt (b) wird die Form (4) mit dem Stapel in die Vakuumkammer (6) eingebracht. Der Stapel wird mit dem Werkzeug (7) zusammengepresst, so dass in dem Stapel keine bzw. nur noch sehr wenig Luft enthalten ist. Die Höhe (b) des Stapels beträgt nunmehr ca. 1,8 mm und ist somit deutlich geringer, als die Höhe (a) des unkomprimierten Stapels. Nun wird die Vakuumkammer über die Abpumpvorrichtung (5) evakuiert. Anschließend werden die überstehenden Kanten (Ü) umlaufend miteinander verschweißt. Nach dem Belüften der Vakuumkammer (6) und der Öffnung des Werkzeugs (7) wird das fertige Halbzeug (12) entnommen (Verfahrensschritt c)). Da im Inneren des von Ober- (2) und Unterfolie (1) umschlossenen Volumens ein sehr viel geringerer Druck als der Luftdruck herrscht, werden die einzelnen Lagen des Stapels aufeinander gepresst. Sie können sich so kaum gegeneinander verschieben, wodurch die durch die Form (4) aufgeprägte Topologie erhalten bleibt. Das so vorgeformte Halbzeug ist lagerbar.

### Bezugszeichenliste

- 1: Unterfolie
- 2: Oberfolie
- 3: Schichtfolge
- 31: metallische Einleger
- 311: umgeformte (abgekantete) metallische Einleger
- 4: Form
- 5: Absaugvorrichtung zur Evakuierung
- 6: hermetisch abgeschlossener Raum
- 7: Werkzeug
- 11: umlaufende Schweißnaht zur Verbindung von Ober- und Unterfolie
- 12: fertiges Halbzeug
- Ü: seitlicher Überstand der Ränder von Ober- und Unterfolie über die Schichtfolge
- a: Höhe des unkomprimierten Stapels
- b: Höhe des komprimierten Stapels
- B: Überbiegung zur Kompensation der Rückfederung der metallischen Einleger

## Patentansprüche

1. Verfahren zu Herstellung eines schichtförmigen Halbzeugs zur Weiterberarbeitung zu einem Faserverbundwerkstoff-Bauteil in einem Werkzeug zum Konsolidieren, wobei das Halbzeug eine Schichtfolge (3) aufweist, die mindestens eine Schicht unkonsolidierten Verstärkungsfasergebildes und mindestens eine Schicht mit einem oder mehreren metallischen Einlegern (31) umfasst und die zwischen einer Ober- und einer Unterfolie (2, 1) angeordnet ist, wobei entweder die Ober- und die Unterfolie (2, 1) aus thermoplastischem Matrixwerkstoff bestehen oder die Schichtfolge (3) zusätzlich zu dem Verstärkungsfasergebilde und zu der mindestens einen Schicht mit einem oder mehreren metallischen Einlegern (31) weiterhin einen Matrixwerkstoff aufweist, **dadurch gekennzeichnet, dass**
a. die Schichtfolge (3) zwischen der Ober- und der Unterfolie (2, 1) angeordnet wird,
b. die überstehenden Ränder der Ober- und der Unterfolie (2, 1) miteinander verbunden werden,
c. das Volumen zwischen Ober- und Unterfolie (2, 1) evakuiert wird und
d. das Halbzeug so verformt wird, dass eine der Geometrie des Werkzeugs zum Konsolidieren entsprechende einfach oder mehrfach gekrümmte Form des Halbzeugs erzeugt wird, wobei mindestens eine der Krümmungen durch mindestens einen der metallischen Einleger (31) verläuft,
e. wobei die Schritte b. und c. vor Schritt d. in beliebiger Reihenfolge, zeitgleich oder überlappend ausgeführt werden.

2. Verfahren zur Herstellung eines schichtförmigen Halbzeugs nach Anspruch 1, **dadurch gekennzeichnet, dass** die Schichtfolge (3) aufgebaut wird, indem mindestens eine Schicht unkonsolidiertes Verstärkungsfasergebilde mit mindestens einem taschen- oder röhrenförmigen Schlitz bereitgestellt wird, wobei in dem mindestens einen taschen- oder röhrenförmigen Schlitz mindestens ein metallischer Einleger (31) eingebracht wird.

3. Verfahren zur Herstellung eines schichtförmigen Halbzeugs nach Anspruch 1, **dadurch gekennzeichnet, dass** die Schichtfolge (3) aufgebaut wird, indem mindestens eine Schicht unkonsolidiertes Verstärkungsfasergebilde und mindestens eine Schicht mit metallischen Einlegern (31) flächig aufeinander abgelegt werden.

4. Verfahren zur Herstellung eines schichtförmigen Halbzeugs zur Weiterberarbeitung zu einem Faserverbundwerkstoff-Bauteil in einem Werkzeug zum Konsolidieren, wobei das Halbzeug eine Schichtfolge (3) aufweist, die mindestens eine Schicht unkonsolidierten Verstärkungsfasergebildes und mindestens eine Schicht mit einem oder mehreren metallischen Einlegern (31) umfasst und die zwischen einer Ober- und einer Unterfolie (2, 1) angeordnet ist, wobei entweder die Ober- und die Unterfolie (2, 1) aus thermoplastischem Matrixwerkstoff bestehen oder die Schichtfolge (3) zusätzlich zu dem Verstärkungsfasergebilde und zu der mindestens einen Schicht mit einem oder mehreren metallischen Einlegern (31) weiterhin einen Matrixwerkstoff aufweist, **dadurch gekennzeichnet, dass**
a. die Schichtfolge (3) zwischen der Ober- und der Unterfolie (2, 1) angeordnet wird und
b. in eine einfach oder mehrfach gekrümmte Form (4), die der Geometrie des Werkzeugs zum Konsolidieren entspricht, eingebracht und dieser angepasst wird, wobei mindestens ein metallischer Einleger (31) gekrümmt wird,
c. die überstehenden Ränder der Ober- und der Unterfolie (2, 1) miteinander verbunden werden und
d. das Volumen zwischen Ober- und Unterfolie (2, 1) evakuiert wird,
wobei die Schritte b., c. und d. in einer der Reihenfolgen b., c., d. oder b., d., c. oder c., d., b. oder d., c., b. ausgeführt werden.

5. Verfahren zur Herstellung eines schichtförmigen Halbzeugs nach Anspruch 1 oder 4, **dadurch gekennzeichnet, dass** in a. Ober- und Unterfolie (2, 1) zurechtgeschnitten, zwischen diesen die Schichtfolge (3) angeordnet und die Folien mit Überstand um die Kontur der größten zwischen Ober- und Unterfolie (2, 1) befindlichen Schicht der Schichtfolge (3) abgeschnitten werden.

6. Verfahren zur Herstellung eines schichtförmigen Halbzeugs nach Anspruch 1 oder 4, **dadurch gekennzeichnet, dass** die Unter- und Oberfolie (2, 1) vollständig an den überstehenden Rändern verbunden und anschließend zur Evakuierung die Unter- und/oder Oberfolie (2, 1) durchdrungen werden und so mindestens eine Einführöffnung für die Abpumpvorrichtung (5) geschaffen wird, mit der das Volumen evakuiert wird, wobei die dabei entstandenen Einführöffnungen nach dem Evakuieren wieder druckhaltend verschlossen werden.

7. Verfahren zur Herstellung eines schichtförmigen Halbzeugs nach Anspruch 1 oder 4, **dadurch gekennzeichnet, dass** das Evakuieren erfolgt, indem Ober- und Unterfolie (2, 1) sowie die dazwischen befindliche Schichtfolge (3) in einem hermetischen Raum (6) abgelegt werden, der anschließend evakuiert wird und wobei danach die überstehenden Ränder der Ober- und Unterfolie (2, 1) vollständig umlaufend miteinander verbunden werden.

8. Verfahren zur Herstellung eines schichtförmigen Halbzeugs nach Anspruch 1 oder 4, **dadurch gekennzeichnet, dass** das Evakuieren erfolgt, indem Ober- und Unterfolie (2, 1) sowie die dazwischen befindliche Schichtfolge (3) auf eine Temperatur unterhalb der Schmelztemperatur bzw. der Reaktionstemperatur des Matrixmaterials erhitzt und mittels einer mechanischen Einrichtung (7) die darin befindliche Luft von innen nach außen verdrängt wird.

9. Verfahren zur Herstellung eines schichtförmigen Halbzeugs nach Anspruch 1 oder 4, **dadurch gekennzeichnet, dass** beim Verbinden der überstehenden Ränder der Ober- und Unterfolie (2, 1) mindestens eine Absaugöffnung geöffnet bleibt, durch die das zwischen Ober- und Unterfolie (2, 1) befindliche Volumen evakuiert wird und die anschließend durch vollständiges Verbinden von Ober- und Unterfolie (2, 1) weitestgehend gasdicht geschlossen wird.

10. Verfahren zur Herstellung eines schichtförmigen Halbzeugs nach einem der Ansprüche 1 oder 4, **dadurch gekennzeichnet, dass** während des Evakuierungsvorgangs zusätzlich ein Niederhalter (7) auf Ober- und Unterfolie (2, 1) sowie die dazwischen befindlichen Schichten gedrückt wird.

11. Verfahren zur Herstellung eines schichtförmigen Halbzeugs nach einem der Ansprüche 1 bis 10, **dadurch gekennzeichnet, dass** das Verbinden von Ober- Unterfolie (2, 1) mittels Verschweißung, Verklebung, Umschlagen oder Bördeln erfolgt.

12. Verfahren zur Herstellung eines schichtförmigen Halbzeugs nach einem der Ansprüche 1 bis 11, **dadurch gekennzeichnet, dass** überstehendes Material von Ober- und Unterfolie (2, 1) mittels Scheren, Cuttern, pulsierenden Cuttern, Laserschneidvorrichtungen, thermisch oder durch Stanzen nahe der Schweißnähte abgetrennt wird.

## Claims

1. A method for producing a layered semi-finished product for further processing to a fiber-reinforced composite component in a tool for consolidating, wherein the semi-finished product has a layer sequence (3), which comprises at least one layer of an unconsolidated reinforcing-fiber structure and at least one layer comprising one or a plurality of metal inserts (31) and which is arranged between an upper and a lower film (2, 1), wherein either the upper and the lower film (2, 1) are made of thermoplastic matrix material or the layer sequence (3), in addition to the reinforcing-fiber structure and to the at least one layer comprising one or a plurality of metal inserts (31), further has a matrix material, **characterized in that**
a. the layer sequence (3) is arranged between the upper and the lower film (2, 1),
b. the protruding edges of the upper and the lower film (2, 1) are connected to one another,
c. the volume between upper and lower film (2, 1) is evacuated and
d. the semi-finished product is deformed such that a mold of the semi-finished product, which corresponds to the geometry of the tool for consolidating and which is curved once or several times, is created, wherein at least one of the curvatures runs through at least one of the metal inserts (31),
e. wherein steps b. and c. are carried out in any desired sequence prior to step d., at the same time or so as to overlap.

2. The method for producing a layered semi-finished product according to claim 1, **characterized in that** the layer sequence (3) is constructed **in that** at least one layer of unconsolidated reinforcing-fiber structure comprising at least one pocket-shaped or tubular slit is provided, wherein at least one metal insert (31) is introduced into a pocket-shaped or tubular slit.

3. The method for producing a layered semi-finished product according to claim 1, **characterized in that** the layer sequence (3) is constructed **in that** at least one layer of unconsolidated reinforcing-fiber structure and at least one layer comprising metal inserts (31) are placed flat on top of one another.

4. The method for producing a layered semi-finished product for further processing to a fiber-reinforced composite component in a tool for consolidating, wherein the semi-finished product has a layer sequence (3), which comprises at least one layer of an unconsolidated reinforcing-fiber structure and at least one layer comprising one or a plurality of metal inserts (31) and which is arranged between an upper and a lower film (2, 1), wherein either the upper and the lower film (2, 1) are made of thermoplastic matrix material or the layer sequence (3), in addition to the reinforcing-fiber structure and to the at least one layer comprising one or a plurality of metal insert (31), further has a matrix material, **characterized in that**
a. the layer sequence (3) is arranged between the upper and the lower film (2, 1),
b. is introduced into a mold (4), which is curved once or several times and which corresponds to the geometry of the tool for consolidating, and is adapted to said mold, wherein at least one metal insert (31) is curved,
c. the protruding edges of the upper and the lower film (2, 1) are connected to one another and
d. the volume between upper and lower film (2, 1) is evacuated,
wherein the steps b., c. and d. are carried out in the sequences b., c., d. or b., d., c. or c., d., b. or d., c., b..

5. The method for producing a layered semi-finished product according to claim 1 or 4, **characterized in that** in a., upper and lower film (2, 1) are cut to size, the layer sequence (3) is arranged therebetween, and the films are cut off with protrusion around the contour of the largest layer present between upper and lower film (2, 1) of the layer sequence (3).

6. The method for producing a layered semi-finished product according to claim 1 or 4, **characterized in that** the upper and lower film (2, 1) are completely connected along the protruding edges and the lower and/or upper film (2, 1) are subsequently pierced for the evacuation, and at least one insertion opening is created in this manner for the pumping device (5), by means of which the volume is evacuated, wherein the insertion openings created thereby are closed again in a pressure-retaining manner after the evacuation.

7. The method for producing a layered semi-finished product according to claim 1 or 4, **characterized in that** the evacuation takes place **in that** upper and lower film (2, 1) as well as the layer sequence (3) located therebetween are placed into a hermetic room (6), which is subsequently evacuated and wherein the protruding edges of the upper and lower film (2, 1) are then connected to one another in a completely circumferential manner.

8. The method for producing a layered semi-finished product according to claim 1 or 4, **characterized in that** the evacuation takes place **in that** upper and lower film (2, 1) as well as the layer sequence (3) located therebetween are heated to a temperature below the melting temperature or the reaction temperature, respectively, of the matrix material and the air contained therein is expelled from the inside to the outside by means of a mechanical device (7).

9. The method for producing a layered semi-finished product according to claim 1 or 4, **characterized in that**, when connecting the protruding edges of the upper and lower film (2, 1), at least one suction opening remains open, through which the volume located between upper and lower film (2, 1) is evacuated and which is subsequently closed in a largely gas-tight manner by completely connecting upper and lower film (2, 1).

10. The method for producing a layered semi-finished product according to one of claims 1 or 4, **characterized in that** a blank holder (7) is additionally pressed onto upper and lower film (2, 1) as well as the layers located therebetween during the evaluating process.

11. The method for producing a layered semi-finished product according to one of claims 1 to 10, **characterized in that** the connecting of upper- lower film (2, 1) takes place by means of sealing, adhesion, folding over or flanging.

12. The method for producing a layered semi-finished product according to one of claims 1 to 11, **characterized in that** protruding material of upper and lower film (2, 1) is cut off by means of scissors, cutters, pulsating cutters, laser cutting devices, thermally or by punching close to the sealing seams.

## Revendications

1. Procédé de fabrication d'un produit semi-fini multicouche pour sa transformation ultérieure en un composé en plastique renforcé de fibres dans un outil de consolidation, dans lequel le produit semi-fini comporte une séquence de couches (3) qui inclut au moins une couche à structure de fibres de renfort non consolidée et au moins une couche avec un ou plusieurs inserts métalliques (31) et qui est agencée entre un film supérieur et un film inférieur (2, 1), dans lequel soit les films supérieur et inférieur (2, 1) consistent en un matériau de matrice thermoplastique, soit la séquence de couches (3) comporte, outre la structure de fibres de renfort et ladite au moins une couche avec un ou plusieurs inserts métalliques (31), un matériau de matrice, **caractérisé en ce que**
a. la séquence de couches (3) est agencée entre les films supérieur et inférieur (2, 1),
b. les bords saillants des films supérieur et inférieur (2, 1) sont connectés entre eux,
c. le volume compris entre les films supérieur et inférieur (2, 1) est évacué, et
d. le produit semi-fini est déformé de manière à obtenir une forme à une ou plusieurs courbures du produit semi-fini, correspondant à la géométrie de l'outil de consolidation, dans lequel au moins une des courbures passe par au moins l'un des inserts métalliques (31),
e. dans lequel les étapes b. et c. sont exécutées avant l'étape d. selon une séquence quelconque, de manière simultanée ou chevauchante.

2. Procédé de fabrication d'un produit semi-fini multicouche selon la revendication 1, **caractérisé en ce que** la séquence de couches (3) est constituée de telle sorte qu'au moins une couche de structure de fibres de renfort non consolidée est pourvue d'au moins un renfoncement en forme de poche ou de tube, dans lequel au moins un insert métallique (31) est introduit dans ledit au moins un renfoncement en forme de poche ou de tube.

3. Procédé de fabrication d'un produit semi-fini multicouche selon la revendication 1, **caractérisé en ce que** la séquence de couches (3) est constituée de telle sorte qu'au moins une couche de structure de fibres de renfort non consolidée et au moins une couche avec des inserts métalliques (31) sont posées à plat les unes sur les autres.

4. Procédé de fabrication d'un produit semi-fini multicouche pour sa transformation ultérieure en un composé en plastique renforcé de fibres dans un outil de consolidation, dans lequel le produit semi-fini comporte une séquence de couches (3) qui inclut au moins une couche de structure de fibres de renfort non consolidée et au moins une couche avec un ou plusieurs inserts métalliques (31) et qui est agencée entre un film supérieur et un film inférieur (2, 1), dans lequel soit les films supérieur et inférieur (2, 1) consistent en un matériau de matrice thermoplastique, soit la séquence de couches (3) comporte, outre la structure de fibres de renfort et ladite au moins une couche avec un ou plusieurs inserts métalliques (31), un matériau de matrice, **caractérisé en ce que**
a. la séquence de couches (3) est agencée entre les films supérieur et inférieur (2, 1), et
b. est insérée dans une forme à une ou plusieurs courbures (4) qui correspond à la géométrie de l'outil de consolidation et est adaptée à ladite forme, dans lequel au moins un insert métallique (31) est plié,
c. les bords saillants des films supérieur et inférieur (2, 1) sont connectés entre eux, et
d. le volume compris entre les films supérieur et inférieur (2, 1) est évacué,
dans lequel les étapes b., c. et d. sont exécutées selon la séquence b., c., d. ou b., d., c. ou c., d., b. ou encore d., c., b.

5. Procédé de fabrication d'un produit semi-fini multicouche selon la revendication 1 ou 4, **caractérisé en ce qu'**à l'étape a. les films supérieur et inférieur (2, 1) sont rognés, **en ce que** la séquence de couches (3) est agencée entre ces films, et **en ce que** les films présentant des excédents sont découpés selon le contour de la couche la plus grande de la séquence de couches (3) présente entre les films supérieur et inférieur (2, 1).

6. Procédé de fabrication d'un produit semi-fini multicouche selon la revendication 1 ou 4, **caractérisé en ce que** les films inférieur et supérieur (2, 1) sont entièrement connectés aux bords saillants et les films inférieur et supérieur (2, 1) sont ensuite percés pour leur évacuation, moyennant quoi au moins un orifice d'introduction est ainsi réalisé pour le dispositif de pompage (5), grâce auquel le volume est évacué, dans lequel les orifices d'introduction ainsi réalisés sont de nouveaux fermés de façon étanche après l'évacuation.

7. Procédé de fabrication d'un produit semi-fini multicouche selon la revendication 1 ou 4, **caractérisé en ce que** lors de l'évacuation, les films supérieur et inférieur (2, 1) ainsi que la séquence de couches (3) insérée entre ceux-ci sont posés dans un espace hermétique (6) qui est ensuite évacué, et dans lequel les bords saillants des films supérieur et inférieur (2, 1) sont ensuite connectés entre eux sur tout leur pourtour.

8. Procédé de fabrication d'un produit semi-fini multicouche selon la revendication 1 ou 4, **caractérisé en ce que** l'évacuation se produit de telle sorte que les films supérieur et inférieur (2, 1) ainsi que la séquence de couches (3) qui s'y trouve insérée sont chauffés à une température inférieure à la température de fusion ou à la température de réaction du matériau de matrice et **en ce que** l'air qui s'y trouve est évacué de l'intérieur à l'extérieur au moyen d'un dispositif mécanique (7).

9. Procédé de fabrication d'un produit semi-fini multicouche selon la revendication 1 ou 4, **caractérisé en ce que**, lors de la connexion des bords saillants des films supérieur et inférieur (2, 1), au moins un orifice d'aspiration reste ouvert, à travers lequel le volume compris entre les films supérieur et inférieur (2, 1) est évacué et qui est ensuite fermé de manière substantiellement étanche aux gaz par une connexion complète des films supérieur et inférieur (2, 1).

10. Procédé de fabrication d'un produit semi-fini multicouche selon l'une des revendications 1 ou 4, **caractérisé en ce que** durant le processus d'évacuation, un dispositif de retenue (7) est en outre appliqué contre les films supérieur et inférieur (2, 1) ainsi que contre les couches qui y sont intercalées.

11. Procédé de fabrication d'un produit semi-fini multicouche selon l'une des revendications 1 à 10, **caractérisé en ce que** la connexion des films supérieur et inférieur (2, 1) s'effectue par soudage, par collage, par enveloppement ou par rabattage.

12. Procédé de fabrication d'un produit semi-fini multicouche selon l'une des revendications 1 à 11, **caractérisé en ce que** le matériau saillant des films supérieur et inférieur (2, 1) est éliminé par des ciseaux, des couteaux, des couteaux pulsés, des dispositifs de découpe à laser, un procédé thermique ou un poinçonnage près des cordons de soudure.
